# EUROPEAN PATENT APPLICATION

(11) **EP 2 822 265 A1**
(43) Date of publication of application: **07.01.2015**
(21) Application number: 13198991.5
(22) Date of filing: 20.12.2013
(51) Int. Cl.: H04N 5/225, H04N 5/369, H04N 5/341

(54) **Curved sensor array camera**

(30) Priority: 03.07.2013 US 201313987169
(71) Applicant: Sutton, Gary Edwin, La Jolla, CA 92037 (US); Lockie, Douglas Gene, Los Gatos, CA 95030 (US); Barton, William Maynard, Jr., Encinias, CA 92024 (US)
(72) Inventor: Sutton, Gary Edwin, La Jolla, CA 92037 (US); Lockie, Douglas Gene, Los Gatos, CA 95030 (US); Barton, William Maynard, Jr., Encinias, CA 92024 (US)
(74) Representative: Prinz & Partner mbB

(57) **Abstract**

A camera apparatus is provided including a curved sensor configured as an array of mini-sensors arranged to form a curved surface. An objective lens is mounted on a camera enclosure and a plurality of mini-sensors is disposed within said camera enclosure. An optical separator element comprising a plurality of lens segments is disposed between the objective lens and the curved sensor array for splitting the captured image emerging from said objective lens and refocusing the splits sections onto the individual mini-sensors. Each of the plurality of mini-sensors has an output connected to a signal processor for image processing.

## Description

The present invention relates to a camera apparatus having a curved sensor array, the sensor comprising an array of facets or mini-sensors. An intermediate optical element is provided for focusing light rays from the objective lens onto the separate mini-sensors.

Current photographic cameras evolved from the first "box" and "bellows" models into three basic formats by the late twentieth century. The rangefinder came first. It was followed by the SLR, or, single lens reflex and finally the Compact "Point and Shoot" cameras.

A conventional camera includes an enclosure, an objective lens and a flat section of photographic film or a flat sensor. A simple lens with a flat film or sensor faces several problems. Light travels over a longer pathway to the edges of the film or the sensor's image area, diluting those rays.

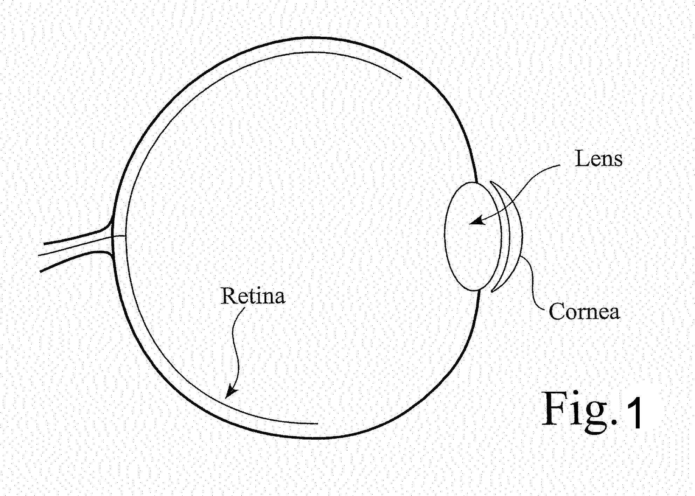

Figure 1 presents a simplified view of the human eye, which includes a curved surface for forming an image. The human eye, for example, needs only a cornea and a single lens to form an image. But on average, one human retina contains twenty-five million rods and six million cones. Today's high end cameras use lenses with from six to twenty elements. Only the rarest, most expensive cameras have as many pixels as the eye has rods and cones, and none of these cameras capture images after sunset without artificial light.

The eagle eye has eight times as many retinal sensors as the human eye, made possible by a simple lens and rounded sensors on the curved retina. No commercially available camera today has a pixel count which would equal one fourth of the sensors in an eagle's eye. The best conventional cameras use multiple element lenses with sophisticated coatings to compensate for their flat sensors. The eagle sees clearly at noon, in daylight or at dusk with simpler, lighter and smaller optics than any camera.

Conventional SRL and point and shoot cameras as well as those provided in mobile phones suffer from the same four deficiencies. 1) Because they use flat digital sensors, the optics are deficient, producing poor quality pictures. To get normal resolution would require larger and bulkier lenses. 2) The lenses are slow and gather less light, which often means flash is required to enhance the illumination for pictures taken after sunset or indoors. When the lens is located close to the flash unit, as is required in a compact device, the phenomena known as "red-eye" often occurs. 3) Flash photography shortens battery life and 4) Flash photography is artificial. Faces in the foreground can be bleached white while backgrounds go dark.

US 8,248,499 B2 discloses a camera apparatus with a curvilinear sensor composed of a plurality of planar facets arranged to be separated by gaps. In order to recover missing image information in the gaps, an image stabilization method is employed. After taking a first exposure, movement is imparted to the optical train and a second exposure is then taken. By comparing the two exposures, missing portions due to the gaps can be detected and recovered. While useful, the method requires multiple exposures and additional moving parts to account for the missing gap portions of the image.

The development of a system that reduces the above mentioned problems would constitute a major technological advance, and would satisfy long-felt needs in the field of imaging.

In view of the unprecedented numbers of photos now being taken with mobile phones, and the image quality being second-rate, improvements are needed.

### SUMMARY OF THE INVENTION

According to the present invention, an apparatus is provided comprising a camera enclosure. An objective lens is mounted on said camera enclosure and a plurality of mini-sensors is provided within said camera enclosure on a curved surface to form a curved sensor array. An optical separator element comprising a plurality of lens segment is disposed between the objective lens and the curved sensor array for refocusing rays of light emerging from said objective lens onto the plurality of mini-sensors. A signal processor is provided for image processing, where each of the mini-sensors has an output connected to a signal processor.

Advantageously, the sensor is shaped as a shell in three dimensions, as opposed to conventional sensors, which are planes that are generally contained in two physical dimensions.

The present invention may be incorporated into a mobile communication device, where the term "mobile communication device" is intended to include any apparatus or combination of hardware and/or software which may be used to communicate, which includes transmitting and/or receiving information, data or content. Such devices include cellular or wireless telephones, smart phones, personal digital assistants, laptop or notebook computers, iPads™ or other generally portable device which may be used for telecommunications.

Further objectives and advantages of the present invention, and a more complete understanding of this invention, will become apparent from the following description of preferred embodiments, with reference to the accompanying drawings.

### A BRIEF DESCRIPTION OF THE DRAWINGS

Figure 1 is a simplified depiction of the human eye.
Figure 2 provides a generalized schematic diagram of a digital camera with a curved sensor.
Figure 3 shows a cross-sectional view of a generally curved surface comprising a number of flat facets.
Figure 4 provides a perspective view of the curved surface shown in Figure 3.
Figures 5a and 5b show additional details of the sensor illustrated in Figure 4, before and after enlarging the gaps.
Figures 6 and 7 illustrate the feature of variable pixel density by comparing views of a conventional sensor with one according to an embodiment, where pixel density is more concentrated in the center.
Figure 8 is a schematic side sectional view of a camera apparatus in accordance with another embodiment.
Figure 9 is a front view of the sensor of the camera apparatus of Fig. 8.
Figure 10 is a block diagram of a camera apparatus in accordance with a further embodiment.
Figures 11 and 12 show successive first and second exposures of a cat, where the views are superimposed on the mini-sensors and gaps in a sensor array.
Figure 13 shows the final composite image of the cat.
Figure 14 is a schematic diagram which depicts the known arrangement using optical image stabilization.
Figure 15 is a schematic diagram of an embodiment of the present invention, including a curved sensor array of mini-sensors together with an intermediate optical separator.

### A DETAILED DESCRIPTION OF EMBODIMENTS

In the present specification, the terms "curvilinear," "curved," and "concave" encompass any line, edge, segment, surface or feature that is not completely colinear with a straight line. The term "sensor" encompasses any detector, imaging device, measurement device, transducer, focal plane array, charge-coupled device (CCD), complementary metal-oxide semiconductor (CMOS) or photocell that responds to an incident photon of any wavelength.

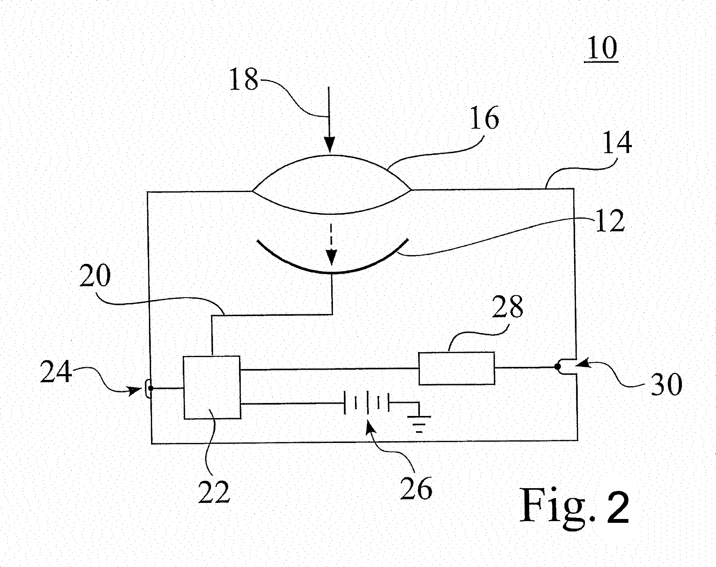

Figure 2 provides a generalized schematic diagram of a digital camera 10 with a curved sensor sub-assembly 12. A housing 14 has an optical element 16 mounted on one of its walls. The objective lens 16 receives incoming light 18. In this embodiment, the optical element is an objective lens. In general, the sensor 12 converts the energy of the incoming photons 18 to an electrical output 20, which is then fed to a signal or photon processor 22. The signal processor 22 is connected to user controls 24, a battery or power supply 26 and to a solid state memory 28. Images created by the signal processor 22 are stored in the memory 28. Images may be extracted or downloaded from the camera through an output terminal 30, such as a USB port.

Embodiments of the present invention are not limited to cameras, but also include mobile communication devices with a camera that incorporates a curved sensor array. Such arrays may comprise aggregations of facets or segments referred to as mini-sensors. Any suitable polygonal facets or segments may be used, including squares, rectangles, triangles, trapezoids, pentagons, hexagons, septagons, octagons or others.

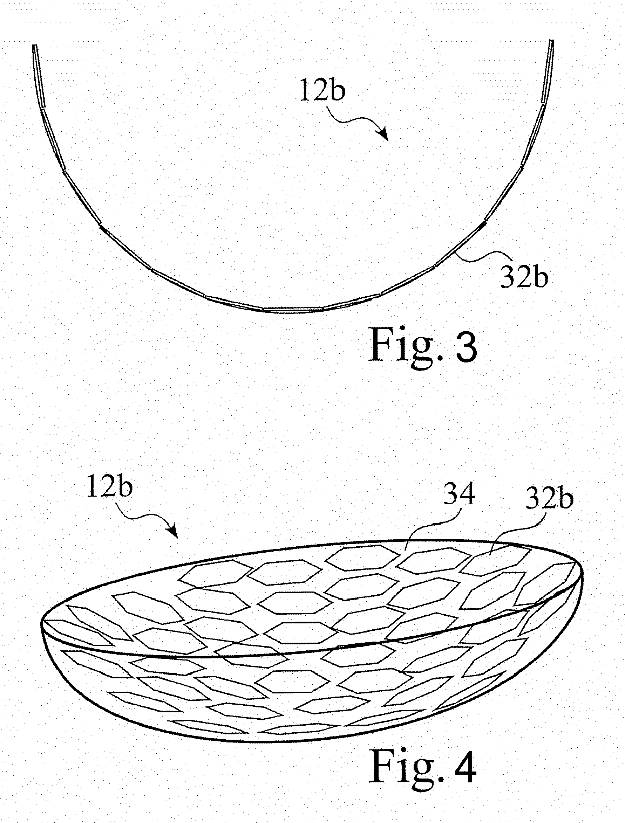

Figures 3 and 4 provide side and perspective views of a generally spherical sensor surface 12b comprising a number of flat facets 32b. Figure 4 shows exaggerated gaps 34 between the facets. The facets could each have hundreds, thousands or many millions of pixels. In this specification, the facets of the sensor 12 are identified with reference characters 32, 32a, 32b, 32c and so on.

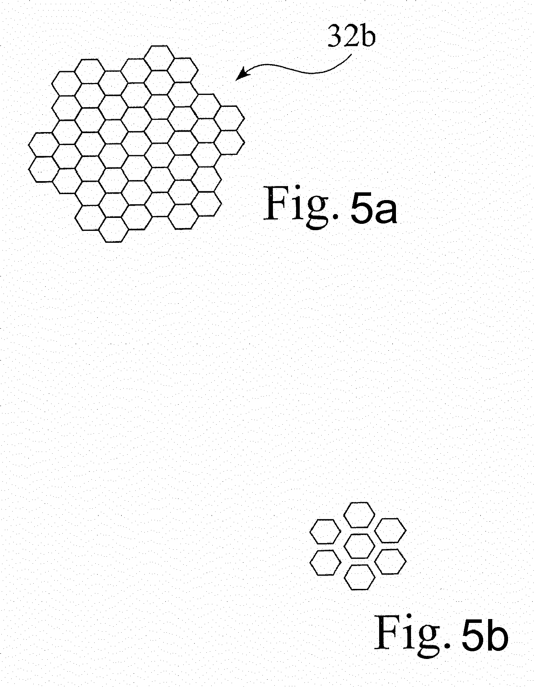

Figure 4 and 5 provide detailed views of facets or mini-sensors on the curved sensor array12b. In general, the more polygons that are employed to mimic a generally spherical surface, the more the sensor will resemble a smooth curve. Either the front side or the rear side of the wafer of sensor chips may attached to a flexible membrane that may bend slightly (such as MYLAR™ or KAPTON™), but which is sufficiently rigid to maintain the individual facets in their respective

### Digital Zoom and Variable Density of Pixels

Just as with optical zoom, a digital zoom camera shows the operator exactly the scene that is being processed from the camera sensor. This may be a wide angle photo, a normal perspective photo or a telephoto view.

Digital zoom is software-driven. The camera is operated to capture only a small portion of the central image, the entire scene or any perspective in between. The monitor shows the operator what portion of the overall image is being recorded. Digital zooming out to telephoto is possible with the present sensor array, which uses mini-sensors with denser pixels in its center and the software can use all the data. Since the center has more pixels per area, the telephoto image, even though it is cropped down to a small section of the sensor, produces a crisp image. When the center of the sensor is configured with dense pixilation, a higher quality digitally zoomed images is made possible.

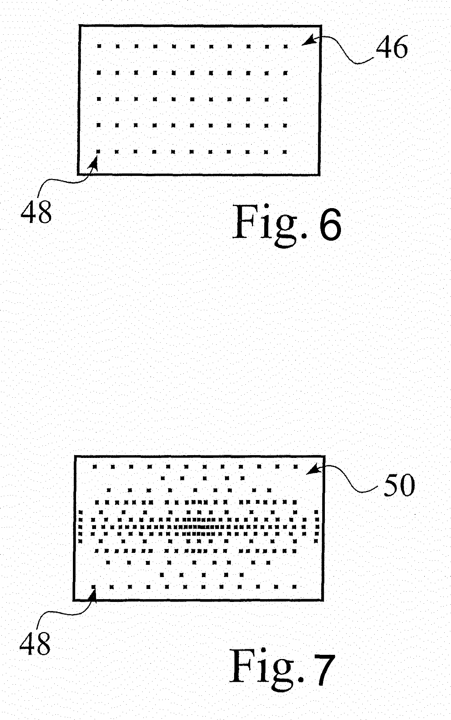

Figures 6 and 7 illustrate this feature, which utilizes a high density concentration of pixels 48 at the center of a sensor or a mini-sensor. By concentrating pixels near the central region of the sensor, digital zoom becomes possible without loss of image detail. This unique approach provides benefits for either flat or curved sensors. In Figure 6, a conventional sensor 46 is shown, which has pixels 48 that are generally uniformly disposed over the surface of the sensor 46. Figure 7 shows a sensor or a mini-sensor 50 for use in an embodiment of the present invention, which has pixels 48 that are more densely arranged toward the center of the sensor 50.

### Mobile communication device

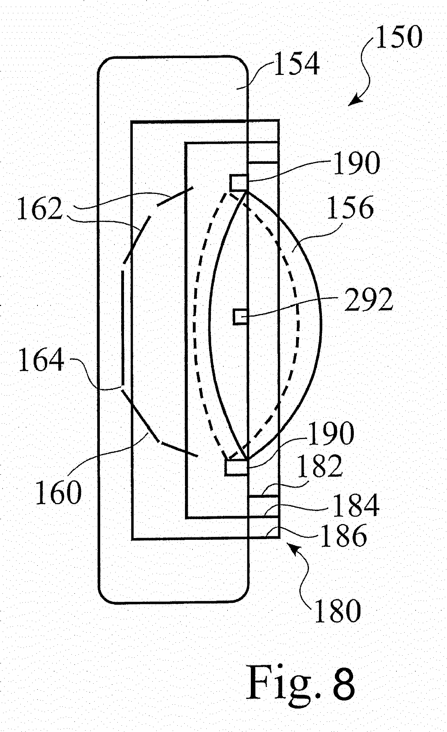

The use of the present camera in a mobile communication device is illustrated in Fig 8. It will be understood that numerous conventional features such as a battery, shutter release, aperture monitor and monitor screen have been omitted for the purposes of clarity. The camera comprises a hermetically-sealed enclosure 154 accommodating a generally curved sensor 160 and a lens 156. Enclosure 154 is filled with Argon, Xenon or Krypton.

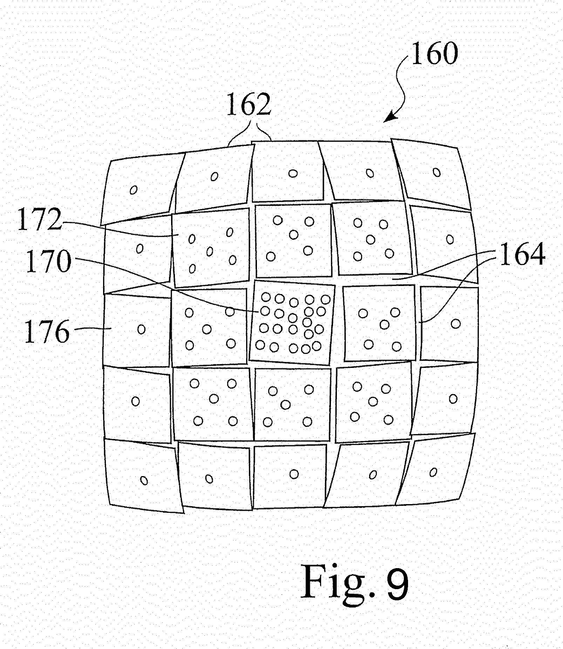

A preferred configuration of the sensor array is shown in Figure 9, which shows a front view of the sensor 160. It comprises a plurality of flat square mini-sensors or facets 162 arranged to be relatively inclined so as to form an overall curved configuration. To minimize the area of the substantially triangular gaps 164 which result between the elements 162, the center square 170 is the largest, and the adjacent ring of eight squares 172 is made of slightly smaller squares so that they touch or nearly touch at their outermost corners. The next ring of sixteen squares 176 has slightly smaller squares than the inner ring 172.

In this embodiment, the gaps 164 between the elements 162 may used as pathways for electrical connectors.

The camera 150 further comprises a lens shade extender arrangement 180. When the user zooms out digitally to a telephoto perspective, shade member 186 is extended. In this mode, only the center portion 170 of the curved sensor 160 is used. Since only that sensor center is densely covered with pixels, the image definition will be crisp.

Although the center square 170 with a high pixel density is relatively expensive, it represents a relatively small portion of the overall sensor array. It is only necessary to provide a single such center square, thus keeping down the overall cost. A huge cost advantage is that it provides an acceptable digital zoom without the need for accessory lenses. Accessory lenses cost far, far more than this sensor, and are big, heavy and slow. The outer ring 176 has the smallest squares and the lowest pixel count and so they are relatively inexpensive. Thus, taking into account the entire assembly of squares, the total cost of the sensor is low, bearing in mind it is capable of providing an acceptable performance over a wide range of perspectives.

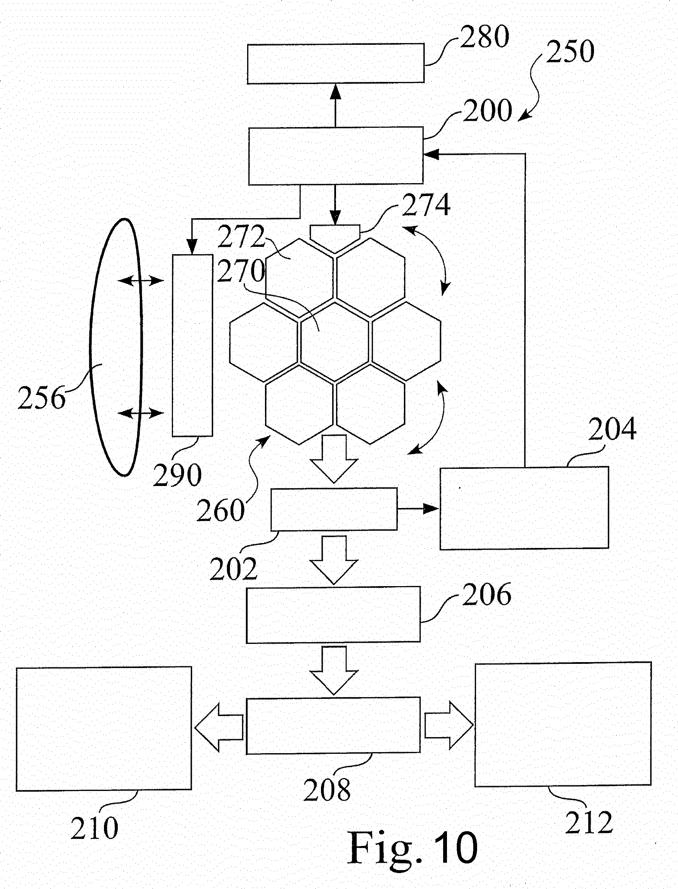

In Figure 10, illustrates a further embodiment of the invention applied to a camera. The camera 250 has many of the same features of the camera 150 of Figures 8 and 9. A non-planar sensor 260 has a central region 270 with high pixel density and a surrounding region comprising facets 272 with low pixel density. A shutter control 274 is also illustrated. The shutter control 274 together with a focus/stabilization actuating mechanism 290 for lens 256 and a lens shade actuator 280 are controlled by an image sequence processor 200.

The signals from pixels in facets 270, 272 are supplied to a raw sensor capture device 202. Another output of device 202 is supplied to a device 206 for effecting pixel density normalization, the output of which is supplied to an image processing engine 208. A first output of engine 208 is supplied to a display/LCD controller 210. A second output of engine 208 is supplied to a compression and storage controller 212.

In this camera, a processing method may also be used so that a complete image is produced from an array of mini-sensors that are physically spaced apart by gaps. As also shown in Figure 4, the camera includes a generally concave sensor which is formed with gaps 34 between facets 32. A first and a second exposure is taken and processed in an image stabilization program. The signal processor picks up the image data missing from the first exposure and stitches it back into the first exposure, creating a complete image.

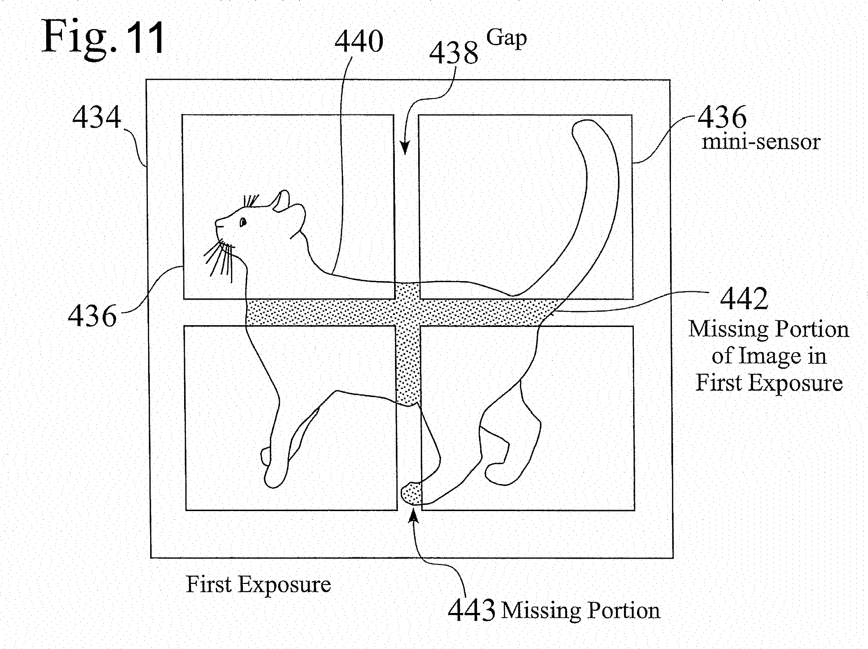

Figures 11 through 13 more clearly illustrate the known image stabilization or stitching process to account for the gaps. In Figure 11, an image of the cat is superimposed over a portion of a camera's sensor 434. The sensor 434 includes four generally square mini-sensors 436 which are separated by gaps 438. In Figure 11, the camera takes a first exposure while optical image stabilization is active. The first exposure records only those portions of the cat's image 440 which register with the mini-sensors 436. The other portions of the entire cat's image which are not recorded are shown as cross-hatched "missing portions" 442 of the image.

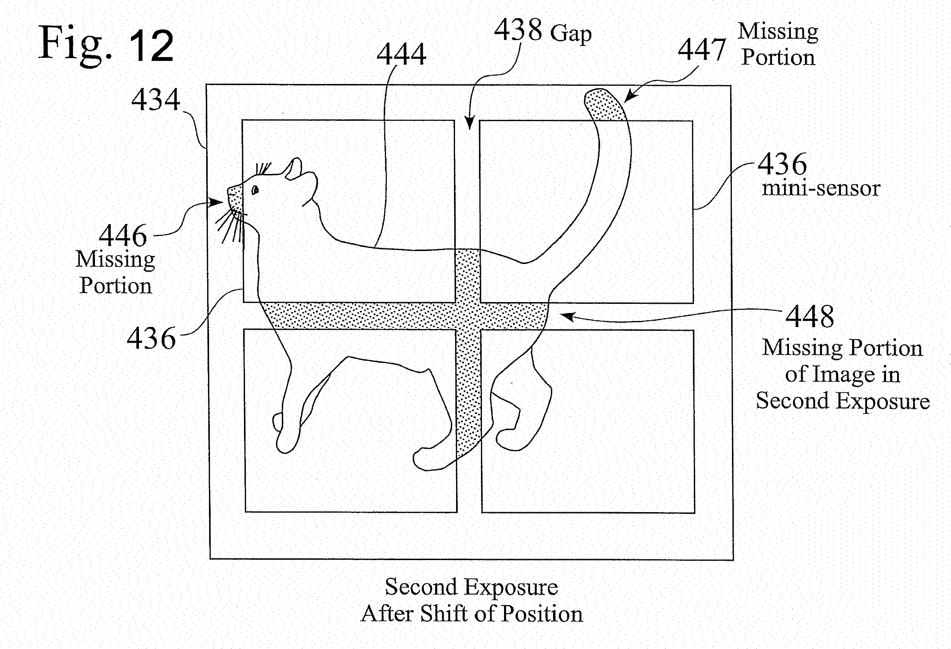

In Figure 12, the image stabilization stops and then moves the image or the sensor moves itself. The second exposure is then taken with the image stabilization back in effect. Those portions of the cat's image 444 are recorded which register with the mini-sensors 436. The other portions of the entire cat's image that are not recorded over the gaps 438 are shown as cross-hatched "missing- portions" 448 of the image.

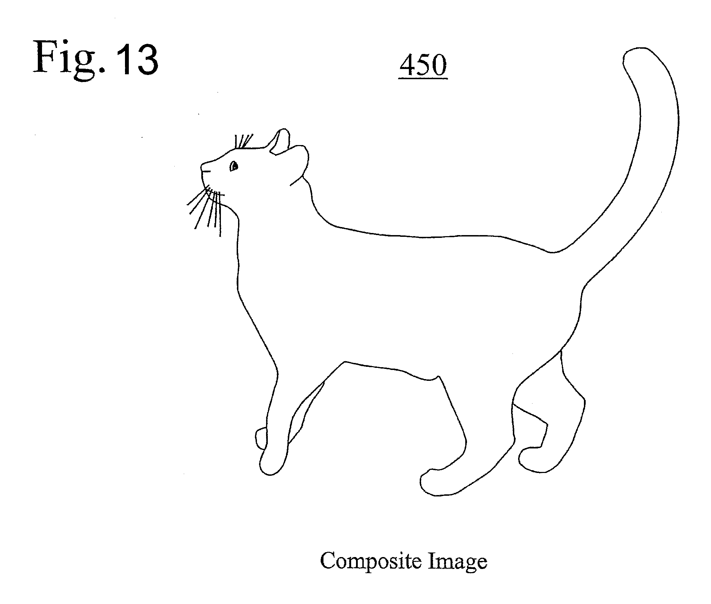

After the camera records the first and second exposures, image stabilization software stored in the camera's memory is executed on the camera's processor, which compares the two exposures, pixel by pixel, and detects the missing portions in each exposure. The software then creates a composite image 450, as shown in Figure 13, which "stitches together" the originally recorded and missing portions to produce a complete image.

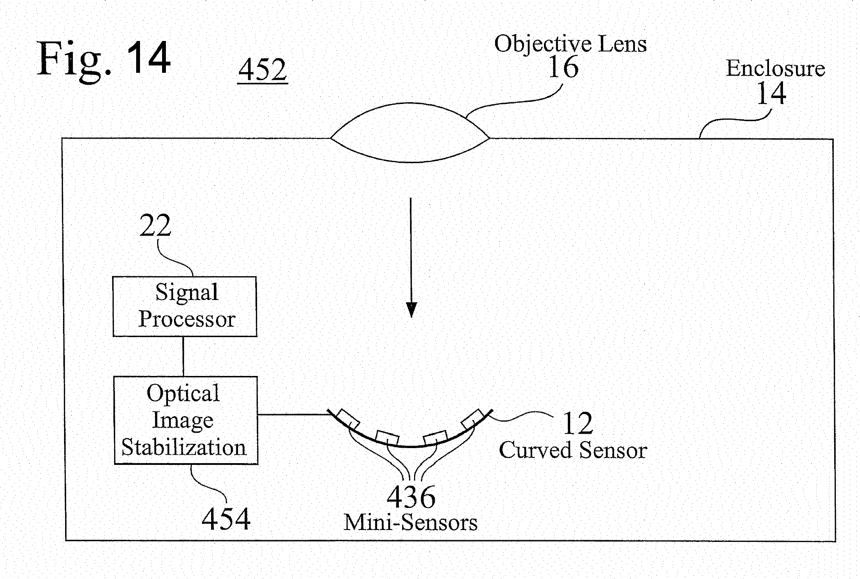

Figure 14 gives a schematic view of a camera 452 that incorporates both a curved sensor array and the known optical image stabilization. An objective lens 16 resides on an enclosure 14. Inside the camera, a curved sensor 12 is positioned to receive light rays from the objective lens 16 above it. The curved sensor 12 includes a number of mini-sensors 436. The output of the mini-sensors 436 is connected to an optical image stabilization circuit 454, which is also connected to a signal processor 22.

### Optical means for avoiding the gap portions of an image

As illustrated in the embodiments of Figures 4, 9 and 14, the present curved sensor arrays are composed of plurality of mini-sensors or facets, with a gap separating the individual mini-sensors. The sensors are arranged in an array to form a shell or bowl-shaped sensor as illustrated in Figure 4. The mini-sensors are preferably flat which allows for economical construction of the generally curved sensor array. In the past, the software-driven optical image stabilization procedure, as presented above, has been carried out to recover the missing portions of an image associated with the gaps.

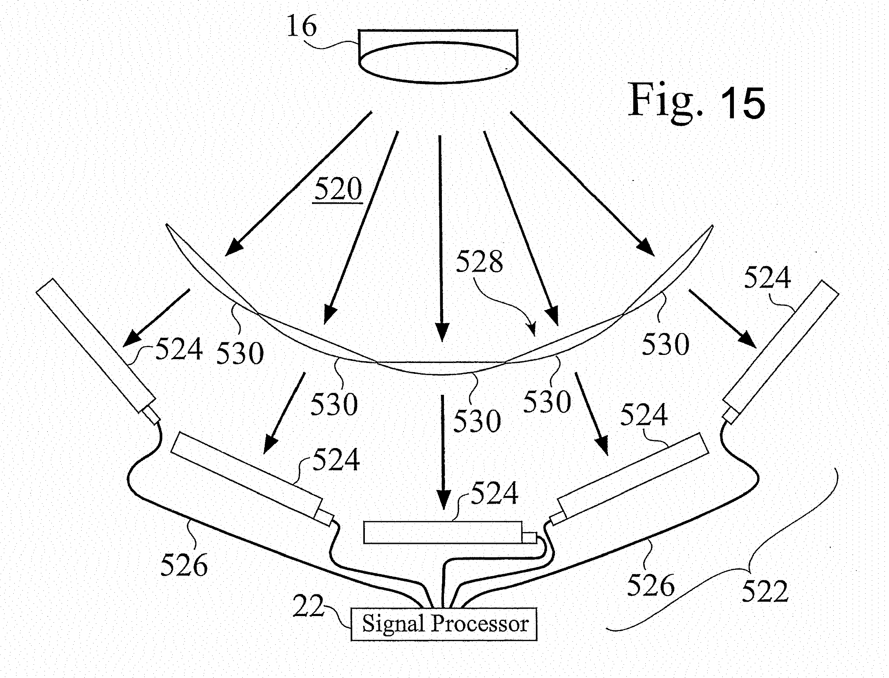

Another way to account for the missing gap information is to divert the impinging image away from the gaps, through optical means, such that image portions associated with the gaps are avoided altogether. This can be accomplished by providing a separating and concentrating optical element 528, also referred to here as an optical separator 528, in the optical path between the objective lens 16 and the mini-sensor array 522 as illustrated in Figure 15.

Comparing the optical arrangements in Figures 14 and 15, both make use of a multi-faceted curved sensor array. In Figure 14, the known optical image stabilization procedure would be needed to account for the gaps. In Figure 15, the optical separator 528, splits the image emerging from the objective lens 16 into subsections, which are refocused onto their associated mini-sensors 524 of the curved sensor array 522. With a precise separation and refocusing of the incoming image by the optical separator, no light falls into the gaps and the image stabilization procedure is no longer required.

The lens segments 530 are arranged to adjoin one another and each segment is aligned to define separate optical paths between the objective lens 16 and one of the mini-sensors 524. In Figure 15, the arrows indicate the respective optical paths for each segment/mini-sensor combination. The characteristics of the lens segment are determined such that the split image section will be refocused or concentrated onto and within the respective surface area of its associated mini-sensor. This is preferably achieved by providing the lens segments 530 as collimating lenses, for example plano-convex lenses as indicated in Figure 15. However, the size of the lens segment compared with the size or surface area of the mini-sensor may be such that a lens segment with converging or diverging characteristics will be required.

As shown in Figure 15, the mini-sensors 524 in the preferred embodiment are flat and are separated by gaps. Each of the mini-sensors 524 has an output 526 for providing a detection signal to the signal processor 22. The signal processor comprises stitching algorithms which are capable of automatically determining the image positioning of one image with respect to neighboring images. The coloring and illumination of the respective images can also be matched or blended during the stitching operation. In this manner, a seamless combination of the captured images from the mini-sensors is obtained in the form of a composite total image. The stitching of individual images to form a composite image is known. Such compositing software preferably also includes image blending methods, for example to blend the images at their seams.

The individual lens segments 530 and their associated mini-sensors 524 will generally have the same polygonal shape. One preferred form is square or rectangular mini-sensors is indicated in Figure 9, where a central mini-sensor is surrounded by 8 first adjacent sensors and then 16 second adjacent sensors. The mini-sensors are arranged in a bowl-shaped configuration. Another shape of the mini-sensors is illustrated in Figures 4 and 5, where hexagonal forms are used to achieve a close-packed structure. A further preferred structure includes a combination of pentagonal and hexagonal mini-sensors arranged in the so-called soccer ball pattern. In general, any polygonal shape of the lens segments and the corresponding mini-sensors may be incorporated. Preferably, the shape of the lens segment and the shape of the mini-sensor will be generally the same, although pairs of differing shapes are also possible.

The optical separator 528 may be made as a single piece of material in a precision glass molding process, with the subsequent grinding, polishing and coating operations. Alternatively, the optical separator 528 may be formed of separated fabricated lens segments 530 which are adjoined to one another using glues, bonding agents or sealing compounds. In either case, the lens segments will be aligned with one another to form a shell structure as show in Figure 15.

The lens segments may be made of a plastic material, in particular, polycarbonate plastics. Alternatively, high grade glass lenses may be employed, for example made of crown glass, lithium glass and quartz materials. The composite optical separator will preferably also be coated, for example with a dichroic organic lens coating.

When the optical separator is formed of separate individual lens segments 530, the segments in an alternative embodiment can be attached to the surface of a curved substrate material provided in the shape of a bowl as indicated in Figure 6.

Again referring to Figure 15, the mini-sensors 524 are substantially aligned along a first arc to form a curved sensor array 522 and the lens segments 530 are aligned along a second arc, where the first and second arcs are formed to be concentric with one another. Correspondingly, in three dimensions, the optical separator 528 and the curved sensor array 522 are both formed as shell structures, where the shells are concentric with one another.

The distance between the optical separator 528 and the sensor array 522 will depend upon several factors. Specifically, the distance will depend upon the size and optical characteristics of the lens segments 530, the size of the mini-sensors 524, the width of the gaps between the mini-sensors and the distance between the objective lens 16 and the optical separator 528. In any case, the distance is determined such that the full split image sections leaving optical separator 528, can be refocused onto the available surface of their associated mini-sensors 524. In particular, the full size of the split image will be received within the respective area of the mini-sensor.

An important advantage of the curved sensor used in the present invention, is that the light rays entering the objective lens of the camera will strike the sensors at nearly identical distances. The light rays also strike the sensor at closer to a right angle on average. Faster lenses capture more photons, which eliminates the need for flash in many low light conditions. In addition less correction is needed for differences in illumination center to edge, while colors are more intense and detail is more resolved.

In the present invention has the above advantages of a curved sensor array and in addition the problem of gaps located between the mini-sensors is substantially eliminated. Not a single photon is wasted or need be recovered. With the provision of the intermediate optical separator, all light rays are captured and no software is required for taking multiple exposures and performing stabilization procedures. No additional mechanical means are needed to induce motion to correct for the gaps. Moreover, conventional image compositing software can be used to stitch together the separate split sections of the image to form a total composite image.

## Claims

1. An apparatus comprising:
a camera enclosure (14);
an objective lens (16) mounted on said camera enclosure (14);
a plurality of mini-sensors (524) provided within said camera enclosure and being arranged on a curved surface to form a curved sensor array (522); and
an optical separator (528) comprising a plurality of lens segments (530) disposed between the objective lens (16) and the curved sensor array (522) for refocusing rays of light emerging from said objective lens (16) onto said plurality of mini-sensors (524),
wherein each of said plurality of mini-sensors (524) has an output connected to a signal processor (22) for image processing.

2. The apparatus according to claim 1, wherein the lens segments (530) are arranged to adjoin one another, and wherein each lens segment (530) is aligned to define an optical path between the objective lens (16) and one of said mini-sensors (524).

3. The apparatus according to claim 1 or 2, wherein lens segments (530) are configured to split the image emerging from the objective lens (16) into image sections, each section separated by one lens segment (530) being refocused onto an associated one of said mini-sensors (524).

4. The apparatus according to claim 1, 2, or 3, wherein the optical characteristic of each lens segment (530) is determined such that the entire split image section generated by each lens segment (530) will be refocused onto and within the surface area of its associated mini-sensor (524).

5. The apparatus according to any one of the claims 1 to 4, wherein the signal processor (22) is adapted to detect the split image sections at the respective mini-sensors (524) and to seamlessly recombine the sections to form a composite total image.

6. The apparatus according to any one of the claims 1 to 5, wherein the lens segments (530) and their associated mini-sensors (524) have generally the same polygonal shape.

7. The apparatus according to any one of the claims 1 to 6, wherein the lens segments (530) are formed as collimating lenses, converging lenses or diverging lenses.

8. The apparatus of any one of the claims 1 to 7, wherein the lens segments (530) of the optical separator (528) are joined together by heat bonding and gluing and wherein the lens segments (530) are aligned to form a shell-like structure.

9. The apparatus of any one of the claims 1 to 8, wherein the lens segments (530) are made of a material selected from the group consisting of plastics, in particular polycarbonates, silicate-based materials including crown glass, lithium glass and quartz materials.

10. The apparatus of any one of the claims 1 to 9, wherein the mini-sensors (524) are aligned along a first arc to form the curved sensor array (522) and the lens segments (530) of the optical separator (528) are aligned along a second arc, the first and second arcs being concentric with one another.

11. The apparatus of any one of the claims 1 to 10, wherein the optical separator (528) and the curved sensor array (522) are both formed as shell structures and wherein the shells are concentric with one another.

12. The apparatus of any one of the claims 1 to 11, wherein the mini-sensors (524) arranged on the curved sensor array (522) are separated by gaps (164, 438), and the gaps serve as paths for electrical conductors (526).

13. The apparatus according to any preceding claim 1 to 12, wherein a plurality of pixels is arranged on each mini-sensor of the curved sensor array (160), with the pixel density varying across the surface of the respective mini-sensors (176), and wherein the mini-sensors (170) near the center of the curved sensor array (160) are configured to have a relatively higher concentration of pixels than those (176) near the edge of the curved sensor array.

14. An apparatus comprising:
a camera enclosure (14);
an objective lens (16) mounted on said camera enclosure;
a plurality of mini-sensors (522) being disposed within said camera enclosure (14);
said plurality of mini-sensors being arranged along a first arc to form a curved sensor array (522);
a separating and concentrating optical element (528) for splitting and focusing rays of light emerging from said objective lens (16) onto said plurality of mini-sensors (524); said separating and concentrating optical element (528) being disposed between said objective lens (16) and said plurality of mini-sensors; said separating and concentrating optical element (528) being aligned along a second arc which is parallel to said first arc;
a signal processor (22), wherein each of said plurality of mini-sensors (524) has an output (526) connected to said signal processor.

15. A mobile communication device for transmitting and/or receiving information, data or content, comprising a camera apparatus as defined in any one of the preceding claims.
